Europäisches Patentamt

European Patent Office

Office européen des brevets

(19)

(11) Veröffentlichungsnummer : **0 005 576**
**B1**

(12) **EUROPÄISCHE PATENTSCHRIFT**

(45) Veröffentlichungstag der Patentschrift :
**28.04.82**

(21) Anmeldenummer : **79200237.0**

(22) Anmeldetag : **15.05.79**

(51) Int. Cl.³ : **G 07 C   3/10**, G 07 C 11/00

(54) **Einrichtung zum Inbetriebsetzen einer Maschine in Abhängigkeit eines in eine Einleseeinheit einsetzbaren Informationsträgers.**

(30) Priorität : **19.05.78 CH 5478/78**

(43) Veröffentlichungstag der Anmeldung :
**28.11.79 (Patentblatt 79/24)**

(45) Bekanntmachung des Hinweises auf die Patenterteilung : **28.04.82 Patentblatt 82/17**

(84) Benannte Vertragsstaaten :
**AT BE CH DE FR GB IT LU NL SE**

(56) Entgegenhaltungen :
**DE - A - 2 552 422**
**DE - A - 2 625 447**
**FR - A - 2 276 638**
**US - A - 3 390 395**

(73) Patentinhaber : **Blunier, Martin**
**Napfstrasse 52**
**CH-3550 Langnau i.E. /BE (CH)**

(72) Erfinder : **Blunier, Martin**
**Napfstrasse 52**
**CH-3550 Langnau i.E. /BE (CH)**

(74) Vertreter : **Bovard, Fritz Albert et al**
**Bovard & Cie. Patentanwälte VSP-Rechtsanwälte**
**Optingenstrasse 16**
**CH-3000 Bern 25 (CH)**

Imprimerie Jouve, 18, rue St-Denis, 75001 Paris, France

# Einrichtung zum Inbetriebsetzen einer Maschine in Abhängigkeit eines in eine Einleseeinheit einsetzbaren Informationsträgers

Die vorliegende Erfindung betrifft eine Einrichtung zum Inbetriebsetzen einer Maschine in Abhängigkeit eines in eine Einleseeinheit einsetzbaren Informationsträgers gemäß dem Oberbegriff des Anspruchs 1.

Es sind bereits Systeme bekannt, mit welchen in Fabrikationsunternehmungen die Zeiterfassung durchgeführt und mit Hilfe der EDV verarbeitet wird. Dabei werden die Auftragszeiten mit Informationsträgern, z.B. Stempelkarten erfasst. Es kann jedoch vorkommen, dass ein Operateur die Stempelkarte zu gebrauchen vergisst, und so Informationen über Maschinenzeiten verloren gehen.

Aus der deutschen Offenlegungsschrift Nr. 25 52 422 ist eine Produktionszähleinrichtung für eine Einzelprodukte und/oder Serienprodukte ausgebende Maschine bekannt. Beim Gegenstand dieser Offenlegungsschrift wird die Betriebszeit einer Maschine durch eine Zeitschaltur festgelegt, also beschränkt.

Es ist eine Aufgabe der vorliegenden Erfindung, eine Einrichtung zu schaffen, mit welcher bei Arbeitsbeginn und bei Arbeitsende sämtliche notwendigen auf einem Informationsträger speicherbaren Daten wie z.B. Auftragsnummer, Arbeitsplatznummer, Operateurnummer, Maschinenzeit, Stückzahl oder Gewicht abgepackter Produkte von einer zentralen Stelle erfasst werden. Weiterhin soll die Maschine vom Operateur nicht in Betrieb genommen werden können, wenn sich der Informationsträger nicht in der Einrichtung befindet. Es ist eine weitere Aufgabe der vorliegenden Erfindung, die Einrichtung so auszubilden, dass die zentrale Stelle die einzelnen der Maschinen zugeordneten Einrichtung überwacht und falls eine Einrichtung auf Ein- oder Auslesen des Informationsträgers gestellt ist, die anderen Einrichtungen für die Datenübermittlung zu blockieren.

Dies wird erfindungsgemäss erreicht durch Steuer- und Verschiebemitte zum Verschieben des Informationsträgers in der Einleseeinheit, wobei das vom Informationsträger betätigte erste Kontaktelement das Steuermittel zum Vorschub des Informationsträgers betätigt und das Steurmittel ein Meldemittel zur Besetzmeldung an ein zentrale Stelle betätigt, wobei durch das Meldemittel ein Abschaltelement blockiert wird und das nach beendetem Arbeitsvorgang betätigbare Abschaltelement Lesemittel zur Endauslesung des Informationsträgers betätigt und das Meldemittel während des Endauslesevorganges eine Besetztmeldung an die zentrale Stelle weitergibt und vom Zähler registrierte Information durch die Ausgabemittel an die zentrale Stelle übermittelt wird und Eingangsklemmen zum Zuführen von Taktsignalen vorhanden sind, so dass die benötigte Betriebszeit der Maschine erfasst werden kann.

Die vorzugsweise bei den einzelnen Maschinen angeordneten Einrichtungen sind in Serie geschaltet und mit einer zentralen Stelle verbunden. Bei der zentralen Stelle können die von den einzelnen Datenerfassungseinrichtungen gelieferten Informationen z.B. mit EDV gespeichert und weiterverarbeitet werden. Die Anordnung der Einrichtungen in Serie besitzt den Vorteil, dass sie an eine Ringleitung angeschlossen werden können und mit relativ wenig Verbindungsleitungen ausgekommen werden kann.

Im Gegensatz zum Gegenstand gemäss der deutschen Offenlegungsschrift n° 25 52 422 wird bei der erfindungsgemässen Einrichtung die zur Fabrikation oder Bearbeitung z.B. eines Werkstückes gebrauchte Maschinenzeit registriert.

Im folgenden wird anhand der beiliegenden Zeichnung ein Ausführungsbeispiel der Erfindung näher beschrieben. Es zeigen

Fig. 1 das Blockschaltbild einer einzelnen Einrichtung,

Fig. 2 ein Zeitschema des Funktionsablaufes in der Einrichtung gemäss Fig. 1,

Fig. 3 die Anordnung mehrerer Einrichtungen in bezug auf eine zentrale Stelle.

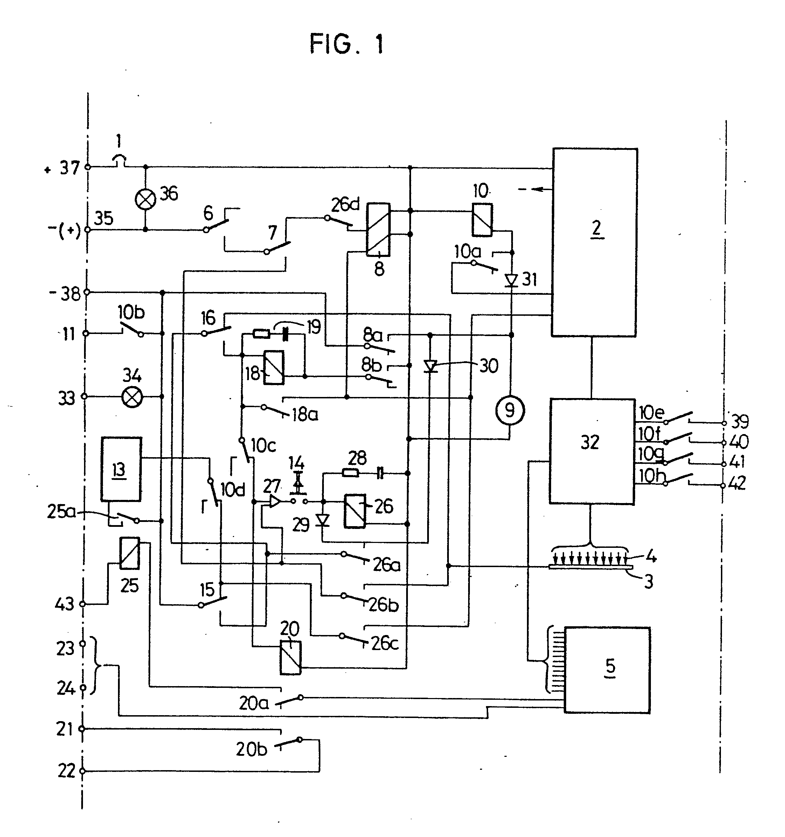

Aus Fig. 1 ist das Blockschaltbild einer einzelnen Einrichtung, die an der Maschine angebracht ist, ersichtlich. Auf den strichpunktiert gezeichneten Linien sind die Anschlüsse der Einrichtung ersichtlich. Diese Anschlüsse werden durch Kabel mit der Einrichtung an der benachbarten Arbeitsmaschine verbunden.

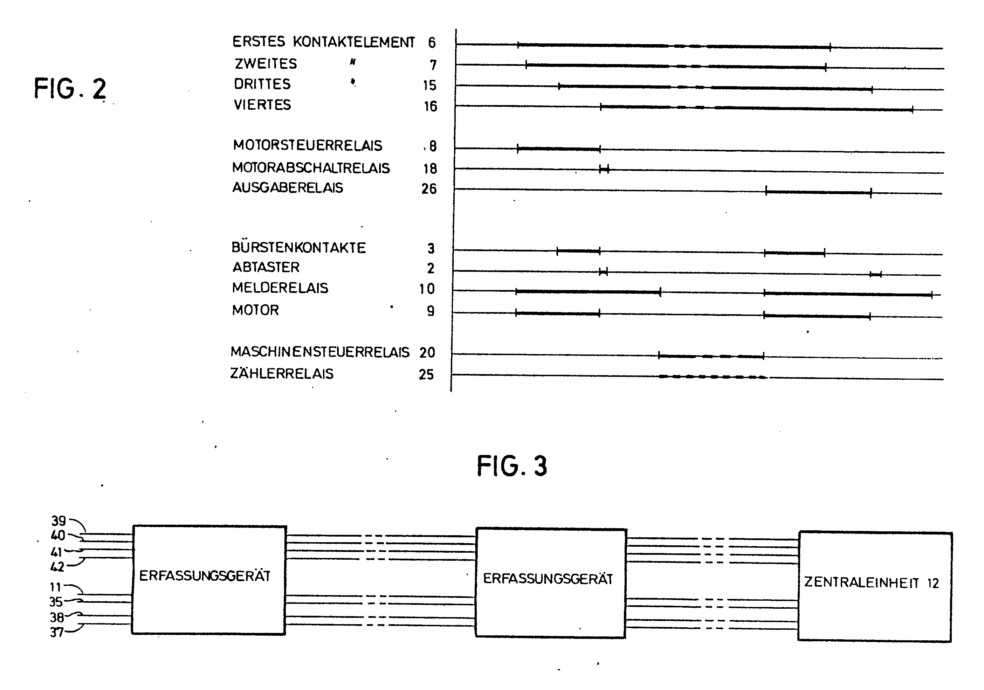

Zum Inbetriebsetzen der Maschine betätigt der Operateur mit einer persönlichen Schlüsselkarte 5 einen Schaltkontak 1. Der als Lochkarte ausgebildete Informationsträger wird in die Einleseeinheit 2 gesteckt. Auf der Lochkarte ist die Auftragsnummer eingelocht. Die Einleseeinheit 2 ist als Abtaster ausgebildet und mit Bürstenkontakten 3 und Streifenkontakten 4 ausgerüstet. Beim Durchgang eines Lochs der Lochkarte unter eine Bürste 3 wird ein Stromkreis geschlossen. Die Information auf der Schlüsselkarte 5, d.h. die Identifizierung des Operateurs wird eingelesen. Die Maschinennummer kann in der Einrichtung selbst oder auf der Lochkarte gespeichert sein. Beim Einschieben der Lochkarte in den Abtaster 2 wird ein erstes Kontaktelement 6 betätigt. Damit wird im Motorsteuerrelais 8 über das zweite Kontaktelement 7 und den Relaisschalter 26d ein Stromkreis geschlossen und das Relais aufgezogen. Die beiden Schalter 8a und 8b werden in Arbeitsstellung gebracht. Dadurch wird der Motor 9 in Gang gesetzt, der die Lochkarte weiter transportiert. Durch den Schaltkontakt 8a wird ebenfalls das Melderelais 10 aufgezogen. Dadurch wird der Schaltkontakt 10b betätigt, welcher ein negatives Potential an die Anschlussklemme 11 legt. Dadurch wird eine Besetztmeldung an eine zentrale Stelle 12 oder Datenverarbeitungsstelle weitergeleitet (siehe Fig. 3). Durch Betätigung des Schaltkontaktes 10d wird der Zähler 13 auf Null gestellt. Die Betätigung des Schaltkontaktes 10c hat zur Folge, dass ein versehentliches Drücken der Taste 14 wirkungslos bleibt. Bei Erregung des Melderelais 10 werden ebenfalls die Kontakte 10e bis 10h geschlossen.

Bei Betätigung des zweiten Kontaktelementes 7, welches in Einschubrichtung der Lochkarte nach dem ersten Kontaktelement 6 angeordnet ist, wird der Stromkreis der ersten Spulenwicklung unterbrochen. Das Relais 8 ist jedoch als polarisiertes Relais oder bistabiles Schaltelement ausgebildet und bleibt in aufgezogenem Zustand. Die Anordnung der beiden Kontaktelemente 6 und 7 in der oben beschriebenen Weise hat den Vorteil, dass dadurch die Lochkarte nicht in der falschen Richtung eingegeben werden kann.

Beim Weitertransport der Lochkarte wird das dritte Kontaktelement 15 betätigt, welches über das noch geschlossene, vierte Kontaktelement 16 die Bürstenkontakte 3 unter Spannung setzt und so ein Auslesen der Information auf der Lochkarte ermöglicht. Bei Betätigung des vierten Kontaktelementes 16 werden die Bürstenkontakte wieder von der Spannungsquelle abgetrennt. Gleichzeitig wird das Motorabschaltrelais 18 aufgezogen und erregt über den Schalter 18a die zweite Wicklung im Motorsteuerrelais 8. Dadurch werden die Schaltkontakte des Relais 8 wieder in Ruhestellung gebracht und der Motor 9 abgestellt. Der Abtaster erhält gleichzeitig mit dem Aufziehen des Relais 18 einen kurzen Impuls. Ueber das Relais 18 ist eine aus einem RC-Glied bestehende Abfallverzögerung 19 geschaltet, damit das Relais 18 etwas länger aufgezogen bleibt als das Relais 8.

Etwa eine Sekunde nach Ausschalten des Relais 8 schaltet auch das Relais 10 aus. Damit wird über den Schalter 10c und die Schaltkontakte 15 und 16 im Maschinensteuerrelais 20 ein Stromkreis geschlossen und dieser aufgezogen und damit die Maschine über die Maschinensteuerklemmen 21 und 22 in Betrieb gesetzt. Gleichzeitig werden auch über die Anschlussklemmen 23 oder 24 dem Zeitzählerrelais 25 von der Zentraleinheit 12 herrührende Impulse zugeführt. Diese Impulse weisen einen zeitlichen Abstand von 6 Min. auf. Ueber eine der Anschlussklemmen 23 oder 24 werden Impulse während der Normalarbeitszeit über die andere Klemme während der Ueberzeit zugeführt.

Nach beendetem Arbeitsgang wird die Taste 14 gedrückt, worauf das Ausgaberelais 26 aufgezogen wird. Die Eingänge des Differenzverstärkers 27 sind in diesem Moment so gepolt, dass am Ausgang ein Signal auftritt und der Stromkreis im Relais 26 geschlossen werden kann. Ueber dem Relais 26 ist ebenfalls ein als RC-Glied ausgebildetes Verzögerungselement 26 geschaltet. Die Dioden 29, 30 und 31 dienen zur Abtrennung der Stromkreise. Beim Aufziehen des Relais 26 werden ebenfalls das Relais 10 aufgezogen, die Bürstenkontakte 3, 4 und der Motor unter Spannung gesetzt. Es erfolgt wiederum eine Besetztmeldung über die Anschlussklemme 11 an die zentrale Stelle 12.

Die Lochkarte wird im Abtaster ausgelesen und es werden mit der Arbeitsplatznummer, der Operateurnummer und der Auftragsnummer auch die im Zähler 13 gezählte Maschinenzeit über die als Diodenmatrix ausgebildete Ausgabeeinheit 32 an die zentrale Datenerfassungsstelle 12 gemeldet.

Bei einer Störung im System wird von der Zentrale mit einem Signal über die Anschlussklemme 33, die Lampe 34 unter Spannung gesetzt. Anstelle der Lampe 34 könnte auch ein akustischer Signalgeber angebracht sein. Wenn bei einer beschriebenen Einrichtung eine Lochkarte ein- oder ausgelesen wird, so erhält die zentrale Datenerfassungsstelle 12 eine Besetztmeldung über die Anschlussklemme 11. Darauf wird bei allen anderen Einrichtungen an der Anschlussklemme 35 das negative Potential in ein positives umgewandelt und die Signallampen 36, welche die Freigabe zur Datenübermittlung anzeigen, erlöschen.

Ueber die Anschlussklemmen 37 und 38 wird die beschriebene Einrichtung von der Zentraleinheit 12 her gespeist. Die Information bezüglich Arbeitsplatz, Arbeitsauftrag, Operateur und Maschinenzeit werden über die Anschlussklemmen 39 bis 42 der Datenerfassungsstelle zugeführt. Ueber die Klemme 43 wird an das Zeitzählerrelais 25 ein Potential gelegt.

Wenn beim Weitertransport die Lochkarte den Schaltkontakt 7 zurückstellt, so sind die Bürstenkontakte 3 nicht mehr unter Spannung, es folgt keine Auslesung mehr. Bei Ausschalten des Relais 26 wird ebenfalls der Motor 9 abgestellt.

In Fig. 2 sind die Einschaltpunkte der Kontaktelemente der Relais, der Bürstenkontakte und des Motors sowie der zeitliche Verlauf des ein- oder ausgeschalteten Zustandes dieser Elemente dargestellt. In der Mitte sind die zeitlichen Abläufe gestrichelt dargestellt während dieser Zeit ist die Maschine in Betrieb. Die Zeit, während der zu Beginn das Melderelais 10 aufgezogen ist, beträgt etwa 5 Sek.

Aus Fig. 3 ist ersichtlich, wie die einzelnen der Maschinen zugeordneten Einrichtungen mit der Zentraleinheit 12 verbunden sind. Die einzelnen Einrichtungen sind mit den Anschlussklemmen gemäss Fig. 1 an eine mehradrige Ringleitung angeschlossen. In Fig. 3 sind nur einige der Anschlussleitungen eingezeichnet.

Es ist denkbar, dass nicht die Maschinenzeit, wie das z.B. beim mechanischen Bearbeiten wie Drehen, Fräsen usw. der Fall ist, eine Rolle spielt, sondern z.B. das Gewicht oder eine Stückzahl abgepackter Produkte. In diesem Fall ist im Ausgangsbereich der Maschine, mit welcher abgepackt wird, ein durch jedes einzelne Stück betätigbares Schaltelement angeordnet, welches über die Anschlüsse 23 und 24 bei jedem Durchgang des Stückes einen Impuls auf den Zähler 13 abgibt, so dass die Anzahl der abgepackten Stücke erfasst werden kann. Es ist auch möglich, dass bei einem Abfüllvorgang nach einer bestimmten Gewichtseinheit von einer Waage über ein Schaltelement ein Impuls über die Anschlüsse 23 oder 24 dem Zähler 13 zugeführt wird.

Anstelle der einzelnen Relais können auch elektronische Bauelemente verwendet werden.

**Ansprüche**

1. Einrichtung zum Inbetriebsetzen einer Maschine in Abhängigkeit eines Einleseeinheit einsetzbaren Informationsträgers mit einem Zähler (13) zum Zählen eines Betriebsparameters ; Ausgabemitteln (32) zur Ausgabe der auf dem Informationsträger abgelesenen Daten und des gezählten Betriebsparameters, wobei mindestens ein durch den Informationsträger betätigbares und zur Freigabe der Maschine bestimmtes Kontaktelement (6) in der Einleseeinheit (2) angeordnet ist, gekennzeichnet durch Steuerund Verschiebemittel (8, 9) zum Verschieben des Informationsträgers in der Einleseeinheit (2), wobei das vom Informationsträger betätigte erste Kontaktelement (6) das Steuermittel (8) zum Vorschub des Informationsträgers betätigt und das Steuermittel (8) ein Meldemittel (10) zur Besetzmeldung an eine zentrale Stelle (12) betätigt, wobei durch das Meldemittel (10) ein Abschaltelement (14) blockiert wird und das nach beendetem Arbeitsvorgang betätigbare Abschaltelement (14) Lesemittel (26) zur Endauslesung des Informationsträgers betätigt und das Meldemittel (10) während des Endauslesevorganges eine Besetztmeldung an die zentrale Stelle (12) weitergibt und vom Zähler (13) registrierte Information durch die Ausgabemittel (32) an die zentrale Stelle (12) übermittelt wird und Eingangsklemmen (23, 24) zum Zuführen von Taktsignalen vorhanden sind, so dass die benötigte Betriebszeit der Maschine erfasst werden kann.

2. Einrichtung nach Anspruch 1, dadurch gekennzeichnet, dass ein vom Informationsträger betätigtes drittes Kontaktelement (15) Einleseelemente (3, 4) der Einleseeinheit (2) einschaltet und ein vom Informationsträger betätigtes viertes Kontaktelement (16) über ein Abschaltemittel (18) das Steuermittel (8) sowie die Einleseelemente (3, 4) ausschaltet, und ein Mittel (20) zum Inbetriebsetzen der Maschine sowie ein Mittel (25) zum Auslösen des Zählvorganges im Zähler (13) betätigt werden.

3. Einrichtung nach Anspruch 1, dadurch gekennzeichnet, dass das Ausgabemittel (32) als Diodenmatrix ausgebildet ist.

4. Einrichtung nach Anspruch 1, dadurch gekennzeichnet, dass durch eine personenbezogene Schlüsselkarte (5) betätigbare Kontaktmittel (1) vorhanden sind.

5. Einrichtung nach Anspruch 1, dadurch gekennzeichnet, dass das erste Schaltelement (6) und ein zweites Schaltelement (7) bezogen auf die Einschieberichtung des Informationsträgers hintereinander angeordnet sind.

6. Einrichtung nach Anspruch 1 oder 2, dadurch gekennzeichnet, dass das Steuermittel (8) ein bistabiles Schaltelement ist und das Abschaltemittel (18) zur Beendigung des Vorschubes des Informationsträgers in der Einleseeinheit (2), das Mittel (26) zur Betätigung der Endauslesung des Informationsträgers nach beendigtem Arbeitsvorgang, das Meldemittel (10), das Mittel (20) zum Inbetriebsetzen der Maschine und das Mittel (25) zur Auslösung des Zählvorganges im Zähler (13) als Relais ausgebildet sind.

7. Einrichtung nach Anspruch 1, dadurch gekennzeichnet, dass im Ausgangsbereich der Maschine ein durch jedes bearbeitete Werkstück betätigtes Schaltelement angeordnet ist, welches über Eingangsklemmen (23, 24) bei jedem Durchgang eines Werkstückes einen Impuls auf den Zähler (13) abgibt, so dass die Anzahl der bearbeiteten Werkstücke erfasst werden kann.

8. Einrichtung nach Anspruch 1, gekennzeichnet durch eine Meldeleitung (11) zur Besetztmeldung an die zentrale Stelle (12), wenn ein Informationsträger eingegeben wird und durch eine Rückmeldeleitung (35) zur Besetztmeldung von der zentralen Stelle (12) an die Einrichtung, wobei an der Rückmeldeleitung (35) ein negatives Potential liegt, wenn die zentrale Stelle (12) zur Uebermittlung von Daten frei ist und an der Rückmeldeleitung ein positives Potential liegt, wenn die zentrale Stelle (12) besetzt ist.

9. Einrichtung nach Anspruch 1, dadurch gekennzeichnet, dass eine Betätigung des Abschalteelementes (14) wirkungslos ist, wenn an der Rückmeldeleitung (35) ein positives Potential liegt.

**Claims**

1. Apparatus for setting a machine in operation in dependence upon a data carrier insertable in a read-in unit, having a counter (13) for counting an operating parameter ; output means (32) for the output of the data read on the data carrier and of the counted operating parameter, at least one contact element (6), actuatable by the data carrier and intended to release the machine, being disposed in the read-in unit (2), characterized by control and displacement means (8, 9) for displacing the data carrier in the read-in unit (2), the first contact element (6) actuated by the data carrier actuating the control means (8) for the feed of the data carrier, and the control means (8) actuating a signalling means (10) for transmitting a busy signal to a central location (12), a cut-off element (14) being blocked by the signalling means (10), and the cut-off element (14), actuatable after termination of the working process, actuating reading means (26) for the final reading-out of the data carrier, and the signalling means (10) relaying a busy signal to the central location (12) during the final reading-out operation, and data recorded by the counter (13) being transmitted to the central location (12) by the output means (32), and input terminals (23, 24) being provided for supplying clock signals, so that the necessary operating time of the machine can be determined.

2. Apparatus according to claim 1, characterized in that a third contact element (15) actuated by the data carrier switches on read-in elements (3, 4) of the read-in unit (2) and a fourth contact element (16) actuated by the data carrier switches off the control means (8) and the read-in elements (3, 4) via a cut-off means (18), and a means (20) for setting the machine in operation as well as a means (25) for triggering the counting operation in the counter (13) are actuated.

3. Apparatus according to claim 1, characterized in that the output means (32) takes the form of a diode matrix.

4. Apparatus according to claim 1, characterized in that contact means (1) actuable by means of a personalized code-card (5) are provided.

5. Apparatus according to claim 1, characterized in that the first switching element (6) and a second switching element (7) are disposed in succession relative to the direction of insertion of the data carrier.

6. Apparatus according to claim 1 or 2, characterized in that the control means (8) is a bistable switching element, and the cut-off means (18) for terminating the feed of the data carrier in the read-in unit (2), the means (26) for actuating the final reading-out of the data carrier after termination of the working process, the signalling means (10), the means (20) for setting the machine in operation, and the means (25) for triggering the counting operation in the counter (13) take the form of relays.

7. Apparatus according to claim 1, characterized in that a switching element actuated by each workpiece processed is disposed in the exit area of the machine, which switching element transmits a pulse to the counter (13) via input terminals (23, 24) each time a workpiece passes through, so that the number of workpieces processed can be determined.

8. Apparatus according to claim 1, characterized by a signal line (11) for transmission of a busy signal to the central location (12) when a data carrier is inserted, and by a reply line (35) for transmitting a busy signal from the central location (12) to the apparatus, there being a negative potential on the reply line (35) when the central location (12) is free for the transmission of data and a positive potential on the reply line when the central location (12) is busy.

9. Apparatus according to claim 1, characterized in that actuation of the cut-off element (14) is ineffective when there is a positive potential on the reply line (35).

**Revendications**

1. Dispositif pour mettre en marche une machine en dépendance d'un porteur d'informations susceptible d'être introduit dans une unité de lecture, avec un compteur (13) pour compter un paramètre de fonctionnement ; des moyens de délivrance de sortie (32) pour délivrer des données lues sur le porteur d'informations et le paramètre de fonctionnement compté ; au moins un élément de contact (6), actionnable par le porteur d'informations et destiné à la libération de la machine, étant disposé dans l'unité de lecture (2), caractérisé par des moyens de commande et de déplacement (8, 9) pour déplacer le porteur d'informations dans l'unité de lecture (2), le premier élément de contact (6) actionné par le porteur d'informations actionnant les moyens de commande (8) pour le déplacement du porteur d'informations, et ces moyens de commande (8) commandant des moyens de signalisation (10) pour transmettre une indication d'occupation à une station centrale (12), ces moyens de signalisation (10) bloquant un élément de déconnexion (14), lequel, actionnable après la fin du processus de travail, actionne des moyens de lecture (26) pour la lecture finale du porteur d'informations, et ces moyens de signalisation (10) continuant de transmettre l'indication d'occupation à la station centrale (9) durant le processus de lecture finale, l'information enregistrée par le compteur (13) étant transmise à la station centrale (12) par les moyens de délivrance de sortie (32), des connexions d'entrée (23, 24) étant prévues pour introduire des signaux cadencés, de façon que le temps de fonctionnement nécessaire de la machine peut être appréhendé.

2. Dispositif selon la revendication 1, caractérisé en ce qu'un troisième élément de contact (15) actionné par le porteur d'informations met en action des éléments de lecture (3, 4) de l'unité de lecture (2), tandis qu'un quatrième élément de contact (16) actionné par le porteur d'informations met hors d'action les moyens de commande (8) par un organe de déconnexion (18) et déconnecte également les éléments de lecture (3, 4), des moyens (20) pour mettre la machine en marche de même que des moyens (25) pour désenclencher le processus de comptage du compteur (13) étant actionnés.

3. Dispositif selon la revendication 1, caractérisé en ce que les moyens de délivrance de sortie (32) sont constitués par une matrice de diodes.

4. Dispositif selon la revendication 1, caractérisé en ce qu'il comprend des moyens à contact (1) actionnables par une carte (5) à code personnalisé.

5. Dispositif selon la revendication 1, caractérisé en ce que le premier élément de contact (6) et un deuxième élément de contact (7) sont disposés de façon successive par rapport à la direction de l'insertion du porteur d'informations.

6. Dispositif selon la revendication 1 ou la revendication 2, caractérisé en ce que les moyens de commande (8) consistent en un élément commutateur bistable, tandis que les moyens de déconnexion (18) pour mettre fin à l'introduction du porteur d'informations dans l'unité de lecture (2), les moyens (26) pour provoquer la lecture finale du porteur d'informations après que le processus de travail a pris fin, les moyens de signalisation (10), les moyens (20) pour mettre la machine en action, et des moyens (25) pour déclencher le processus de comptage du compteur (13), se présentent sous la forme de relais.

7. Dispositif selon la revendication 1, caractérisé en ce qu'un élément de commutation actionné par chaque pièce travaillée ou usinée est disposé dans la région de sortie de la machine, cet élément de commutation transmettant une impulsion au compteur (13), par les connexions d'entrée (23, 24), à chaque passage d'une pièce usinée, de façon que le nombre des pièces usinées puisse être appréhendé.

8. Dispositif selon la revendication 1, caractérisé par une ligne de signal (11) pour la transmission du signal d'occupation à la station centrale (12) lorsque le porteur d'informations est inséré, et par une ligne de contrôle en retour (35) pour l'indication d'occupation depuis la station centrale (12) au dispositif, cette ligne de contrôle en retour (35) portant un potentiel négatif lorsque la station centrale (12) est libre pour la transmission de données, et un potentiel positif lorsque la station centrale (12) est occupée.

9. Dispositif selon la revendication 1, caractérisé en ce que l'actionnement de l'élément de déconnexion (14) est inefficace lorsqu'un potentiel positif se trouve sur la ligne de contrôle de retour (35).

# FIG. 1

## FIG. 2

| | | |
|---|---|---|
| ERSTES KONTAKTELEMENT | 6 | |
| ZWEITES " | 7 | |
| DRITTES , | 15 | |
| VIERTES | 16 | |
| | | |
| MOTORSTEUERRELAIS | 8 | |
| MOTORABSCHALTRELAIS | 18 | |
| AUSGABERELAIS | 26 | |
| | | |
| BÜRSTENKONTAKTE | 3 | |
| ABTASTER | 2 | |
| MELDERELAIS | 10 | |
| MOTOR | 9 | |
| | | |
| MASCHINENSTEUERRELAIS | 20 | |
| ZÄHLERRELAIS | 25 | |

0 005 576

## FIG. 3

| 39 | 40 | 41 | 42 | 11 | 35 | 38 | 37 | ERFASSUNGSGERÄT | ERFASSUNGSGERÄT | ZENTRALEINHEIT 12 |